Europäisches Patentamt

European Patent Office

Office européen des brevets

(19)

(11) Numéro de publication : **0 183 618**
**B1**

(12) **FASCICULE DE BREVET EUROPÉEN**

(45) Date de publication du fascicule du brevet :
27.07.88

(51) Int. Cl.⁴ : **F 16 D 23/04**

(21) Numéro de dépôt : **85402284.5**

(22) Date de dépôt : **22.11.85**

(54) Anneau de synchronisation pour synchroniseur de boîte de vitesses.

(30) Priorité : **27.11.84 FR 8418063**

(43) Date de publication de la demande :
**04.06.86 Bulletin 86/23**

(45) Mention de la délivrance du brevet :
**27.07.88 Bulletin 88/30**

(84) Etats contractants désignés :
**DE GB IT**

(56) Documents cités :
**DE-B- 1 278 853**
**FR-A- 1 313 916**
**FR-A- 2 466 668**
**FR-A- 2 470 897**
**GB-A- 2 019 508**
**US-A- 2 035 507**
**US-A- 4 018 319**

(73) Titulaire : **AUTOMOBILES PEUGEOT**
**75, avenue de la Grande Armée**
**F-75116 Paris (FR)**

**AUTOMOBILES CITROEN**
**62 Boulevard Victor-Hugo**
**F-92200 Neuilly-sur-Seine (FR)**

(72) Inventeur : **James, Patrick**
**24 rue Pétraque**
**F-75116 Paris (FR)**

(74) Mandataire : **Moncheny, Michel et al**
**c/o Cabinet Lavoix 2 Place d'Estienne d'Orves**
**F-75441 Paris Cedex 09 (FR)**

## Description

L'invention est relative aux anneaux de synchronisation pour synchroniseurs utilisés dans certaines boîtes de vitesses. Ces anneaux, traversés par un arbre de la boîte de vitesses, sont destinés à entraîner par friction une pièce voisine, telle qu'une roue dentée, montée folle sur l'arbre.

L'invention concerne ceux de ces anneaux qui comportent d'une part une surface tronconique de friction destinée à coopérer avec une surface complémentaire de ladite pièce voisine, et d'autre part une face frontale sur laquelle sont fixées, uniformément et circulairement réparties, plusieurs colonnettes parallèles à l'axe géométrique de l'anneau et destinées à coopérer avec des orifices d'un manchon du synchroniseur calé sur ledit arbre.

Pour que la surface de friction de l'anneau présente un coefficient de frottement relativement élevé et une bonne résistance à l'usure, l'anneau est avantageusement réalisé, au moins au droit de cette surface, en un matériau organique approprié, notamment à base de résine polyimide ou phénoplaste. Il est ainsi connu, par exemple par le document US-A-2 035 507 de fixer par collage une mince garniture de friction en matière organique sur une surface d'une armature métallique en forme d'anneau, mais la tenue dans le temps d'une telle fixation est douteuse étant donné les sévères contraintes mécaniques, voire thermiques appliquées au synchroniseur. On connaît par ailleurs un anneau de synchronisation réalisé entièrement en matériau organique, de manière à simplifier la fabrication et à procurer à l'anneau une relative légèreté souhaitable pour réduire l'inertie du synchroniseur ; mais les dimensions de l'anneau doivent alors être relativement importantes pour permettre notamment sa solidarisation résistante avec les colonnettes ; par suite son encombrement et son prix de revient s'avèrent excessifs, en particulier pour un usage dans des véhicules automobiles de tourisme.

Afin de remédier à ces inconvénients de la technique antérieure, l'invention a pour but de réaliser un anneau de synchronisation, du type susmentionné, qui présente des caractéristiques de friction requises et une fiabilité satisfaisante tout en étant particulièrement peu onéreux et peu encombrant.

A cet effet, l'invention a pour objet un anneau de synchronisation pour synchroniseur de boîte de vitesses, comportant d'une part, une surface tronconique de friction, d'autre part, une face frontale sur laquelle sont fixées au moins deux colonnettes parallèles à l'axe géométrique de l'anneau, et comprenant une armature métallique à laquelle sont fixées les colonnettes, caractérisé en ce que l'armature est formée d'une rondelle en tôle sur laquelle au moins deux segments annulaires en matière organique sont surmoulés respectivement sur chacune des zones de la rondelle comprises entre deux colonnettes chaque segment délimitant une portion de la surface tronconique de friction.

Suivant une caractéristique avantageuse de l'invention la rondelle comporte, dans chacune desdites zones, au moins une ondulation s'étendant radialement et noyée dans l'un des segments.

L'invention sera mieux comprise à la lecture de la description qui suit d'un mode de réalisation, donné à titre d'exemple, et faite en référence au dessin annexé, sur lequel :

- la Fig 1 est une vue en élévation d'un anneau de synchronisation conforme à l'invention, équipé de trois colonnettes

- la Fig. 2 est une vue en coupe prise suivant la ligne II-II de la Fig. 1 ;

- les Fig 3 et 4 sont des vues partielles en coupe prises respectivement suivant les lignes III-III et IV-IV de la Fig. 1.

On voit sur les figures un anneau 1 ayant une face frontale 1a sur laquelle sont fixées trois colonnettes 2 parallèles à l'axe de l'anneau, destiné à équiper un synchroniseur du type de celui décrit dans le FR-A-1313916, où l'anneau, traversé par un arbre d'une boîte de vitesses est propre à entraîner par une surface tronconique de friction un pignon monté fou sur l'arbre, et où les colonnettes coopèrent avec des orifices d'un manchon calé sur l'arbre.

Cet anneau comprend une armature 3 formée d'une rondelle métallique, et trois segments 4 en forme de secteurs annulaires et en matériau organique.

La rondelle est réalisée en tôle découpée et percée de trois trous 5 uniformément répartis et recevant chacun une extrémité épaulée 6 de l'une des colonnettes 2, lesquelles sont fixées chacune à la rondelle par sertissage de ladite extrémité 6.

La rondelle comporte, dans chacune des trois zones 7 séparant les trois trous 5, deux ondulations 8 formées par emboutissage et s'étendant radialement du bord circulaire intérieur 3a au bord circulaire extérieur 3b de la rondelle. Chaque ondulation définit un relief en creux 8a sur la face recevant les colonnettes et un relief en saillie 8b sur la face opposée.

Chaque segment 4 recouvre l'une des zones 7 presque totalement sur ladite face opposée et sur le bord extérieur 3b mais seulement dans le relief en creux 8a sur la face tournée vers les colonnettes, de sorte que la face 1a de l'anneau est sensiblement plate. La périphérie 4a des segments forme une portion de surface tronconique classiquement striée destinée à coopérer par friction avec une surface complémentaire d'une pièce voisine du synchroniseur, telle que le susdit pignon monté fou.

En variante, les segments recouvrent, au droit des zones 7, non pas le bord extérieur 3b mais le bord intérieur 3a de la rondelle, et les portions de surface tronconiques sont formées sur leur face intérieure, tournée vers l'axe géométrique de l'anneau.

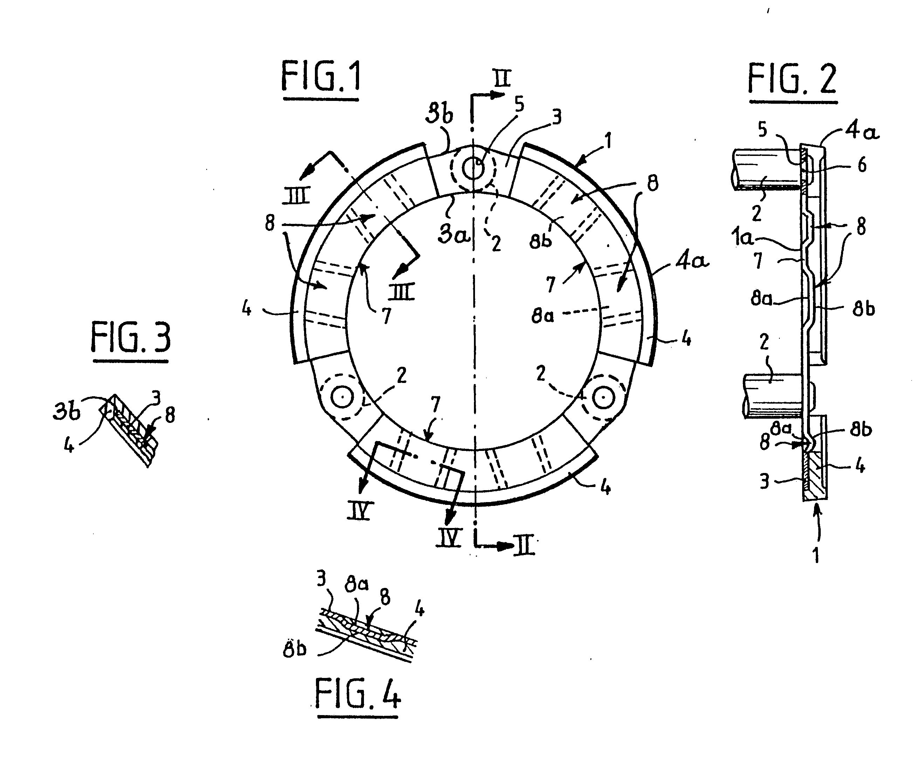

Les segments 4 sont fixés à la rondelle par surmoulage, notamment au droit des ondulations 8 qui se trouve noyées dans les segments, comme visible aux Fig. 3 et 4. Ce surmoulage procure une liaison particulièrement fiable entre l'armature et chaque segment grâce à leur grande surface de contact et l'interpénétration des reliefs 8 dans le segment, et grâce à l'étendue radiale des reliefs dont les bords assurent un accouplement pratiquement positif entre l'armature et le segment.

Cet accouplement fiable autorise l'emploi de segments annulaires au lieu des bagues complètes usuelles, ce qui permet un allègement du synchroniseur et l'emploi d'une faible quantité de matériau organique relativement coûteux car de préférence choisi à base de résine polyimide ou phénoplaste particulièrement appropriée aux caractéristiques de frottement et d'endurance requises. De plus, la dimension axiale de l'anneau est faible grâce à la solidarisation peu encombrante de chaque colonnette seulement sur l'armature en tôle.

**Revendications**

1. Anneau de synchronisation pour synchroniseur de boite de vitesses, comportant d'une part, une surface tronconique (4a) de friction, d'autre part, une face frontale (1a) sur laquelle sont fixées au moins deux colonnettes (2) parallèles à l'axe géométrique de l'anneau, et comprenant une armature métallique (3) à laquelle sont fixées les colonnettes (2), caractérisé en ce que l'armature est formée d'une rondelle en tôle sur laquelle au moins deux segments (4) annulaires en matière organique sont surmoulés respectivement sur chacune des zones (7) de la rondelle comprises entre deux colonnettes (2) chaque segment délimitant une portion de la surface tronconique (4a) de friction.

2. Anneau suivant la revendication 1 caractérisé en ce que la rondelle (3) comporte dans chacune desdites zones (7) au moins une ondulation (8) s'étendant radialement et noyée dans l'un des segments (4).

**Claims**

1. Synchronization ring for a synchronizer for a gear box having on the one hand a truncated cone-shaped friction surface (4a) and on the other a front face (1a) to which are fixed at least two posts (2) parallel to the geometrical axis of the ring and incorporating a metal fitting (3) to which are fixed the posts (2), characterized in that the fitting is formed by a sheet metal washer, over which are moulded at least two annular organic material segments (4) respectively to each of the zones (7) of the washer between two posts (2), each segment defining a portion of the truncated cone-shaped friction surface (4a).

2. Ring, according to claim 1, characterized in that the washer (3) has in each of said zones (7) at least one undulation (8) extending radially and formed in one of the segments (4).

**Patentansprüche**

1. Synchronring für eine Getriebesynchronisierung, welcher einerseits eine kegelstumpfförmige Reibfläche (4a), andererseits eine Frontfläche (1a), auf welcher wenigstens zwei zur geometrischen Achse des Rings parallele Säulchen (2) befestigt sind, aufweist, und welcher eine metallene Armierung (3) umfaßt, an welcher die Säulchen (2) befestigt sind, dadurch gekennzeichnet, daß die Armierung durch eine Ringscheibe aus Blech gebildet ist, auf welcher wenigstens zwei ringförmige Segmente (4) aus einem organischen Stoff jeweils auf jeder der zwischen zwei Säulchen (2) eingeschlossenen Zonen (7) der Ringscheibe aufgegossen sind, wobei jedes Segment einen Abschnitt der kegelstumpfförmigen Reibfläche (4a) bestimmt.

2. Ring nach Anspruch 1, dadurch gekennzeichnet, daß die Ringscheibe (3) in jeder dieser Zonen (7) wenigstens eine Wellung (8) aufweist, welche sich radial erstreckt und in eines der Segmente (4) eingelassen ist.

FIG.1

FIG. 2

FIG. 3

FIG.4

0 183 618